# EUROPEAN PATENT APPLICATION

(11) **EP 3 439 276 A1**
(43) Date of publication of application: **06.02.2019**
(21) Application number: 17774791.2
(22) Date of filing: 24.03.2017
(51) Int. Cl.: H04M 3/42, H04M 3/487

(54) **WAIT-FOR-TURN MANAGEMENT SYSTEM, SERVER, METHOD, AND PROGRAM**

(30) Priority: 28.03.2016 JP 2016063911
(71) Applicant: Recruit Co., Ltd., Chuo-ku Tokyo 1040061 (JP)
(72) Inventor: WATASE, Takehiro, Tokyo 100-6640 (JP); SHINTANI, Akinori, Tokyo 100-6640 (JP)
(74) Representative: EIP
(86) International application number: PCT/JP2017/012102
(87) International publication number: WO 2017/170254

(57) **Abstract**

The present disclosure prevents paging for customers waiting for their turns from being performed in a uniform manner. A waiting management system 1 according to an embodiment of the present disclosure is provided with a waiting management server 10 and a speech management server 20, and manages the waiting orders of customers received via each of a customer terminal 30, a store reception robot terminal 40, and a store reception general terminal 50. The waiting management server 10 has: a reception unit 111 that receives the waiting order of a customer; a turn management unit 112 that manages the turn of the customer whose waiting order has been received; and a paging instruction unit 113 that instructs the speech management server 20 to perform paging for a customer at a predetermined timing. The speech management server 20 has: a paging unit 211 that performs paging for a customer using a specific paging speech specified from among a plurality of paging speeches on the basis of a waiting reception form; and a response unit 212 that responds to an inquiry from a customer.

## Description

### Cross-Reference to Related Applications

This application is based on Japanese Patent Application No. 2016-063911, filed on March 28, 2016, the contents of all of which are incorporated herein as a reference.

### Technical Field

The present disclosure relates to a waiting management system, server, method, and program.

### Background Art

Conventionally, there has been proposed a system that manages waiting order received from a customer. For example, Patent Document 1 discloses a device that pages a person whose turn has come by performing automatic originating to the phone number of a cell phone of the person whose turn has come. This device is configured to play previously-stored speech data such as "Your turn is coming. Please come to the window" when receiving a response from the cell phone of the callee.

### Citation List

### Patent Document

Patent Document 1: Japanese Patent Application Laid-Open No. 2009-267700

### Summary

### Technical Problem

The aforementioned conventional device, however, only plays the previously-determined speech data when paging a customer, and therefore the paging is performed in a uniform manner for customers. For example, although a humanoid robot receives waiting orders in some cases with the view of a customer attraction effect in recent years, monotonous paging at the time of turn coming is undesirable in terms of providing consistent user experience (UX). As described above, the conventional device has a problem that the paging for customers waiting for their turns is uniform.

An object of the present disclosure is to prevent paging for customers waiting for their turns from being uniform. Other objects of the present disclosure will become apparent from the detailed description of the entire specification thereof.

### Solution to Problem

A waiting management system according to one aspect of the present disclosure includes: a reception unit that receives the waiting order of a customer; a turn management unit that manages the turn of the customer whose waiting order has been received; and a paging unit that performs paging for a customer at a predetermined timing using a specific paging speech specified from among a plurality of paging speeches on the basis of a waiting reception form.

According to this configuration, paging for a customer is performed by using a paging speech specified on the basis of the waiting reception form, thereby preventing paging for customers from being uniform.

Furthermore, the aforementioned system may be configured in such a way that the reception unit receives the waiting order via a reception terminal and that the reception form includes the type of the reception terminal that received the waiting order. Thereby, the paging for the customer can be performed by using the paging speech specified on the basis of the type of the reception terminal. Moreover, in the above system, the reception form may include a working language used when the waiting order is received. Thereby, the paging for the customer can be performed by using the paging speech specified on the basis of the working language used when the waiting order is received.

Note here that the type of the reception terminal and the working language described above are merely illustrated as examples of the reception form in the present description and the reception form in the present description is not limited thereto. The reception form may include various information on the method, channel, means, architecture, or the like of receiving the waiting order.

Moreover, the aforementioned system may be configured in such a way that the paging unit calls a phone number corresponding to the customer and plays the specific paging speech. Thereby, the paging for the customer can be performed by using a phone.

Furthermore, the aforementioned system may be configured in such a way that the reception unit receives waiting orders in each of a plurality of stores, the turn management unit manages the turns of customers for each reception store, and the specific paging speech is specified from among the plurality of paging speeches on the basis of the waiting reception form and the reception store. Thereby, in addition to the waiting reception form, the paging speech specified on the basis of the reception store can be used for the paging for a customer. This enables the prevention of uniformity among stores in the manner of paging customers, for example.

Furthermore, the aforementioned system may be configured to further include a response unit that responds to an inquiry from a customer, on the basis of the waiting reception form, using a specific responding speech specified from among a plurality of responding speeches. This enables the prevention of uniformity in the manner of responding to an inquiry from a customer, in addition to the paging for a customer.

Still further, the aforementioned system may be configured in such a way that the paging unit performs paging for a customer at a timing when the turn comes to a predetermined position in an order. This enables the customer corresponding to the predetermined turn to be a target of the paging.

A waiting management server according to another aspect of the present disclosure is communicatively connected to a speech management server to manage waiting orders, the waiting management server including: a reception unit that receives the waiting order of a customer; a turn management unit that manages the turn of the customer whose waiting order has been received; and a paging instruction unit that instructs the speech management server to perform paging for a customer at a predetermined timing using a specific paging speech specified from among a plurality of paging speeches on the basis of a waiting reception form.

According to this configuration, the paging for a customer is performed by using a paging speech specified on the basis of a waiting reception form, thereby enabling the prevention of uniformity in the manner of paging for customers.

A waiting management method according to still another aspect of the present disclosure is performed by one or more computers to manage waiting orders, the waiting management method including the steps of: receiving the waiting order of a customer; managing the turn of the customer whose waiting order has been received; and performing paging for a customer at a predetermined timing using a specific paging speech specified from among a plurality of paging speeches on the basis of a waiting reception form.

According to this configuration, the paging for a customer is performed by using a paging speech specified on the basis of a waiting reception form, thereby enabling the prevention of uniformity in the manner of paging for customers.

A waiting management program according to still another aspect of the present disclosure is a waiting management program for managing waiting orders, causing one or more computers to perform the processes of: receiving the waiting order of a customer; managing the turn of the customer whose waiting order has been received; and performing paging for a customer at a predetermined timing using a specific paging speech specified from among a plurality of paging speeches on the basis of a waiting reception form.

According to this configuration, the paging for a customer is performed by using a paging speech specified on the basis of a waiting reception form, thereby enabling the prevention of uniformity in the manner of paging for customers.

### Advantageous Effects of Invention

Various aspects of the present disclosure prevent the paging for customers waiting for their turns from being uniform.

### Brief Description of Drawings

Fig. 1 is a block diagram schematically illustrating the configuration of a network including a waiting management system 1 according to one embodiment of the present disclosure.
Fig. 2 is a diagram illustrating an example of the content of a waiting management table.
Fig. 3 is a diagram illustrating an example of a customer terminal reception screen.
Fig. 4 is a diagram illustrating an example of a reception number issue screen (customer terminal).
Fig. 5 is a diagram illustrating an example of a store terminal reception screen.
Fig. 6 is a diagram illustrating an example of a reception number issue screen (store terminal).
Fig. 7 is a sequence diagram for paging a customer.
Fig. 8 is a sequence diagram for responding to an inquiry from a customer.

### Description of Embodiments

Hereinafter, detailed description will be made on preferred embodiments of the present disclosure with reference to accompanying drawings.

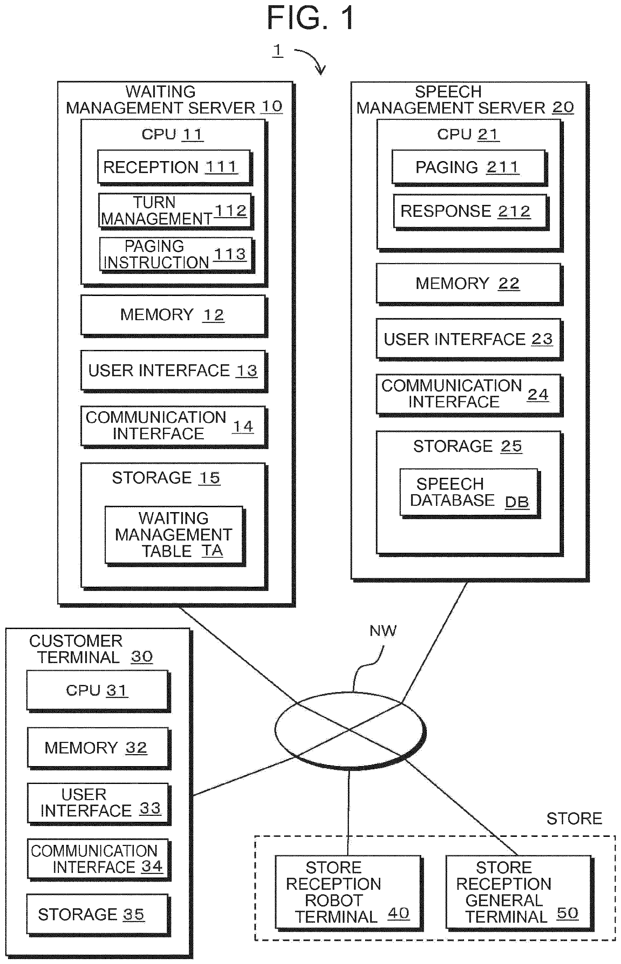

Fig. 1 is a block diagram schematically illustrating the configuration of a network including a waiting management system 1 according to one embodiment of the present disclosure. As illustrated, the waiting management system 1 includes a waiting management server 10 and a speech management server 20. Each of these servers 10 and 20 is communicatively connected to a user terminal 30, a store reception robot terminal 40, and a store reception general terminal 50 via the Internet or any other communications network NW to manage the waiting order of a customer received via each of these terminals 30, 40, and 50. The embodiments of the present disclosure are applicable to management of various waiting orders and the target of the waiting order is not particularly limited. In the following description, however, management of a waiting order in a restaurant or other eating places is described as an example.

The waiting management server 10 has a configuration of a general computer. Specifically, as illustrated in Fig. 1, the waiting management server 10 includes a CPU 11, a main memory 12 consisting of DRAM and the like to temporarily store data and programs, a user interface 13 that exchanges information with a user, a communication interface 14 that controls wired or wireless communications, and a storage 15 consisting of a magnetic disk, a flash memory, and the like to store data and programs. The CPU 11 reads the programs stored in the storage 15 into the main memory 12 to execute instructions included in the programs.

The user interface 13 includes, for example, an information input device such as a keyboard, a mouse, or a touch panel, a speech input device such as a microphone, an image input device such as a camera, an information output device such as a display, and a speech output device such as a loudspeaker. The communication interface 14 is implemented as hardware such as a network adapter, various kinds of communication software, or a combination thereof.

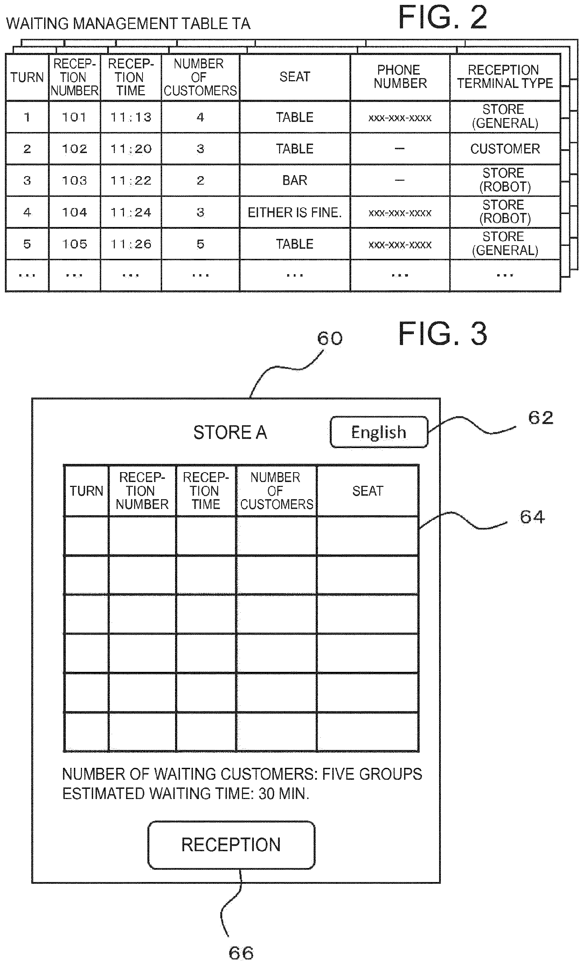

The storage 15 has a waiting management table TA for managing information on received waiting orders. Fig. 2 illustrates the content of the waiting management table TA. As illustrated, the waiting management table TA manages "turn" indicating the current turn, "reception number," "reception time," "the number of customers" waiting for their turns, "seat" indicating the seat style requested by a customer (table or bar), "phone number" of the customer, and "reception terminal type" indicating the type of the terminal having received the waiting order. The phone number is set if the customer requests paging on a phone when the waiting order is received, while the phone number is not set unless the customer requests paging on a phone. Although Fig. 2 illustrates the contents of information on waiting orders in a specific store, the waiting management table TA manages information on waiting orders in a plurality of stores for each store.

The CPU 11 executes instructions contained in the programs stored in the storage 15 or the like, by which the waiting management server 10 functions as a reception unit 111, a turn management unit 112, and a paging instruction unit 113 as illustrated in Fig. 1. The reception unit 111 performs processing related to the reception of waiting orders of customers. For example, the reception unit 111 receives information on a waiting order, which has been received via the customer terminal 30, the store reception robot terminal 40, or the store reception general terminal 50, via a communications network NW and then registers the information on the waiting management table TA. The turn management unit 112 performs processing related to management of the turn of the customer whose waiting order has been received. For example, the turn management unit 112 deletes the information on the customer (reception number) whose turn has come and been processed (guided to a seat) from the waiting management table TA and updates the turns of the remaining customers waiting for their turns (increments the turns by one). The information on the processed customer (reception number) is transmitted from, for example, the store reception robot terminal 40, the store reception general terminal 50, or any other store-installed terminal. The paging instruction unit 113 performs processing related to an instruction of paging the customer. For example, the paging instruction unit 113 instructs the speech management server 20 to page the customer using a specific paging speech at a predetermined timing (for example, at a timing when the turn comes to a predetermined position in an order). Although the details will be described later, the paging speech for use in paging is specified from among a plurality of paging speeches stored in the speech management server 20.

The speech management server 20 has a configuration of a general computer. Specifically, as illustrated in Fig. 1, the speech management server 20 includes a CPU 21, a main memory 22 consisting of DRAM and the like to temporarily store data and programs, a user interface 23 that exchanges information with a user, a communication interface 24 that controls wired or wireless communications, and a storage 25 consisting of a magnetic disk, a flash memory, and the like to store data and programs. The CPU 21 reads the programs stored in the storage 25 into the main memory 22 to execute instructions included in the programs.

The user interface 23 includes, for example, an information input device such as a keyboard, a mouse, or a touch panel, a speech input device such as a microphone, an image input device such as a camera, an information output device such as a display, and a speech output device such as a loudspeaker. The communication interface 24 is implemented as hardware such as a network adapter, various kinds of communication software, or a combination thereof.

The storage 25 has a speech database DB for managing a plurality of speeches for use in paging a customer and responding to an inquiry from a customer. Although the file format of speeches managed in the speech database DB is not particularly limited, it includes, for example, a WAV or mp3 format or the like.

The CPU 21 executes instructions contained in the programs stored in the storage 25 or the like, by which the speech management server 20 functions as a paging unit 211 and a response unit 212 as illustrated in Fig. 1. The paging unit 211 performs processing related to paging for a customer. For example, when being instructed to page a customer by using a specific paging speech by the waiting management server 10 (paging instruction unit 113), the paging unit 211 plays specific paging speech by calling the phone number corresponding to the customer. The response unit 212 performs processing related to a response to an inquiry from a customer. For example, the response unit 212 plays a specific responding speech when having received an incoming call from a terminal such as the customer terminal 30 of a customer waiting for his/her turn. The responding speech for use in responding is specified from among a plurality of responding speeches stored in the speech database DB.

The customer terminal 30 has a configuration of a general computer. Specifically, as illustrated, the customer terminal 30 includes a CPU 31, a main memory 32 consisting of DRAM and the like to temporarily store data and programs, a user interface 33 that exchanges information with a user, a communication interface 34 that controls wired or wireless communications, and a storage 35 consisting of a magnetic disk, a flash memory, and the like to store data and programs. The CPU 31 reads the programs stored in the storage 35 into the main memory 32 to execute instructions included in the programs.

The user interface 33 includes, for example, an information input device such as a keyboard, a mouse, or a touch panel, a speech input device such as a microphone, an image input device such as a camera, an information output device such as a display, and a speech output device such as a loudspeaker. The communication interface 34 is implemented as hardware such as a network adapter, various kinds of communication software, or a combination thereof.

The customer terminal 30 is configured as, for example, a smartphone, a cell phone, a tablet terminal, a wearable device, or the like. The customer terminal 30 displays various types of screens through communications with the waiting management server 10 via a Web browser or other applications installed in the storage 35 or the like.

The store reception robot terminal 40 and the store reception general terminal 50 each have a configuration of a general computer, which is the same as for the customer terminal 30. In addition, the store reception robot terminal 40, for example, has a function of a humanoid robot having a similar appearance to a human and performs an operation (including an output of a speech) appropriate to a result of detection by various sensors provided in a chassis. The store reception robot terminal 40 is configured by using, for example, Pepper® sold by SoftBank Robotics Corp. or the like. In this embodiment, each store that receives waiting orders has one or both of the store reception robot terminal 40 and the store reception general terminal 50 installed therein.

Subsequently, the operations of the waiting management system 1 according to this embodiment configured as described above will be described. First, the operation of receiving a waiting order is described. In this embodiment, the reception of the waiting order is performed through the customer terminal 30, the store reception robot terminal 40, or the store reception general terminal 50. To begin with, the operation of receiving the waiting order through the customer terminal 30 is described.

Fig. 3 illustrates a customer terminal reception screen 60 displayed on the customer terminal 30. The customer terminal reception screen 60 is displayed via a Web browser or other applications installed in the customer terminal 30. As illustrated, the customer terminal reception screen 60 includes a working language switching object 62 for use in switching a working language, a waiting list area 64, and a reception object 66. Between the waiting list area 64 and the reception object 66, the number of waiting customers and estimated waiting time are displayed. The number of waiting customers corresponds to the number of customers (the number of receptions) waiting for their turns managed on the waiting management table TA. The estimated waiting time is calculated by, for example, multiplying the number of waiting customers (the number of receptions) by the predetermined time period. The waiting list area 64 lists information managed on the waiting management table TA other than the phone number and the reception terminal type.

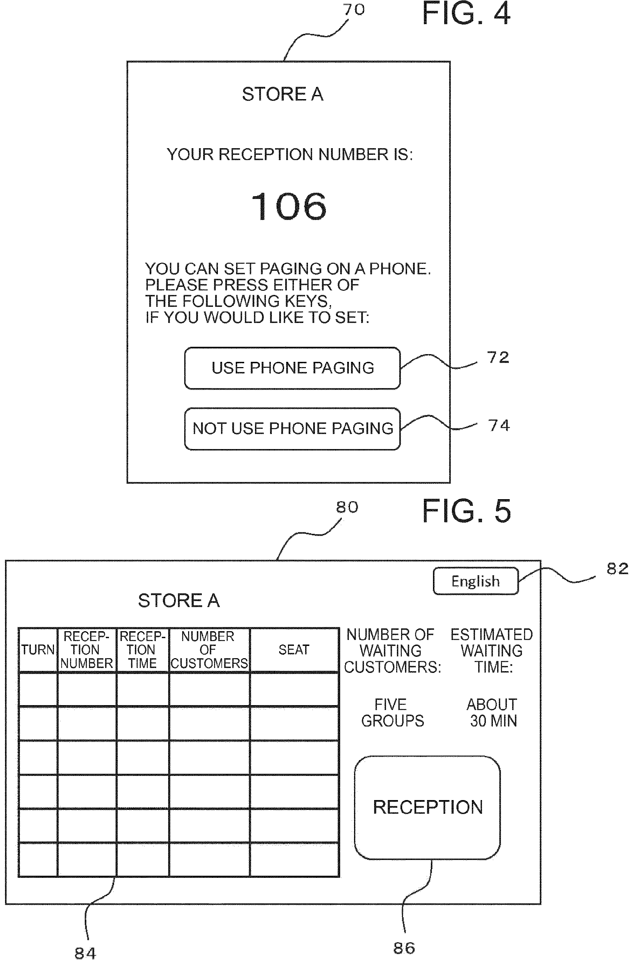

If a customer selects the reception object 66 on the customer terminal reception screen 60, the customer terminal 30 receives an input of the number of customers and an input of a requested seat style and thereafter displays a reception number issue screen 70 illustrated in Fig. 4. As illustrated, the reception number issue screen 70 displays a reception number issued for the customer and has a phone-paging-requested object 72 and a phone-paging-unrequested object 74. The reception number is issued and displayed by the reception unit 111 of the waiting management server 10 with a communication between the customer terminal 30 and the waiting management server 10. With issuing the reception number, the reception unit 111 registers information on the received waiting order on the waiting management table TA. The reception terminal type of the waiting management table TA is set to a value corresponding to the customer terminal 30 ("customer" in the example of Fig. 2). For the reception terminal type, the corresponding value is transmitted from the customer terminal 30 to set the reception terminal type, or the customer terminal 30 transmits an identifier of the terminal (terminal ID) and then the reception terminal type is determined on the basis of the terminal identifier and set on the waiting management server 10 side. In this manner, in response to the selection of the reception object 66 of the customer terminal reception screen 60, the waiting management server 10 receives the waiting order via the customer terminal 30.

If the customer selects the phone-paging-requested object 72 on the reception number issue screen 70, a screen for use in inputting a phone number is displayed on the customer terminal 30. The customer inputs a phone number for receiving paging on a phone (for example, a phone number corresponding to the customer terminal 30) via the screen. The phone number input by the customer is registered on the waiting management table TA. If the customer selects the phone-paging-unrequested object 74, the reception number issue screen 70 is closed without displaying the screen for inputting the phone number.

The following describes an operation of receiving a waiting order via the store reception robot terminal 40 and the store reception general terminal 50 (hereinafter, these are sometimes generically referred to as "store terminal"). In this embodiment, a reception via the store reception robot terminal 40 and a reception via the store reception general terminal 50 are performed by using the same screen. In this embodiment, however, the reception via the store reception robot terminal 40 and the reception via the store reception general terminal 50 may be performed by using screens different from each other.

Fig. 5 illustrates a store terminal reception screen 80 displayed on a store terminal. The store terminal reception screen 80 is displayed via a Web browser or other applications installed in the store terminal. As illustrated, the store terminal reception screen 80 has a working language switching object 82, a waiting list area 84, and a reception object 86 similarly to the customer terminal reception screen 60, with the number of waiting customers and the estimated waiting time displayed in the upper location of the reception object 86.

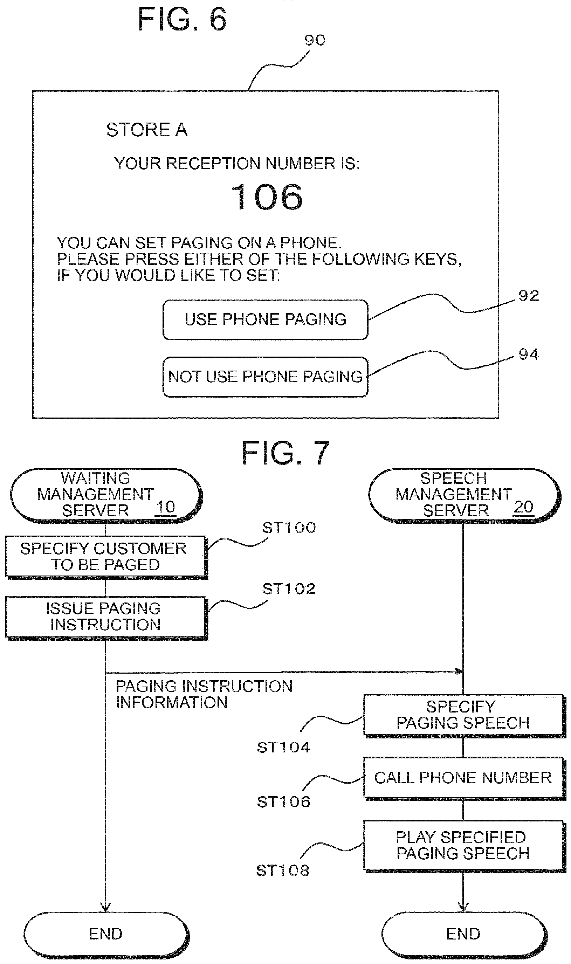

If the customer selects the reception object 86 on the store terminal reception screen 80, the store terminal receives an input of the number of customers and an input of a requested seat style and thereafter displays a reception number issue screen 90 illustrated in Fig. 6. As illustrated, similarly to the reception number issue screen 70, the reception number issue screen 90 displays a reception number issued for the customer and has a phone-paging-requested object 92 and a phone-paging-unrequested object 94. The reception number is issued and displayed by the reception unit 111 of the waiting management server 10 with a communication between the customer terminal and the waiting management server 10. With issuing the reception number, the reception unit 111 registers information on the received waiting order on the waiting management table TA. The reception terminal type of the waiting management table TA is set to a value corresponding to the store reception robot terminal 40 ("store (robot)" in the example of Fig. 2) or to a value corresponding to the store reception general terminal 50 ("store (general)" in the example of Fig. 2). For the reception terminal type, the corresponding value is transmitted from the store terminal to set the reception terminal type, or the store terminal transmits an identifier of the terminal (terminal ID) and then the reception terminal type is determined on the basis of the terminal identifier and set on the waiting management server 10 side. In this manner, in response to the selection of the reception object 86 of the customer terminal reception screen 80, the waiting management server 10 receives the waiting order via the store terminal. Incidentally, in this embodiment, the configuration may be made in such a way that the issued reception number is printed by using a printer capable of communicating with the store terminal.

If the customer selects the phone-paging-requested object 92 on the reception number issue screen 90, a screen for use in inputting a phone number is displayed on the store terminal. The customer inputs a phone number for receiving paging on a phone (for example, a phone number corresponding to the customer terminal 30) via the screen. The phone number input by the customer is registered on the waiting management table TA. If the customer selects the phone-paging-unrequested object 74, the reception number issue screen 90 is closed without displaying the screen for inputting the phone number.

Incidentally, in this embodiment, the configuration may be made in such a way that the customer is able to set paging on means other than a phone (for example, a notification by e-mail) in addition to the paging on a phone.

The operation of receiving a waiting order has been described hereinabove. An operation of paging a customer will be described next. Fig. 7 is a sequence diagram illustrating a communication performed between the waiting management server 10 and the speech management server 20 when paging a customer. When paging the customer, first, the waiting management server 10 specifies the customer to be paged (ST100). Specifically, the paging instruction unit 113 specifies a customer (reception number) whose turn coincides with a predetermined one (for example, third or less) and who has not been paged yet with reference to the waiting management table TA. Whether the paging has been made or not is able to be managed, for example, on the waiting management table TA.

Subsequently, the waiting management server 10 instructs the speech management server 20 to page the specified customer (ST102). Specifically, the paging instruction unit 113 transmits paging instruction information to the speech management server 20. The paging instruction information includes a reception store corresponding to the specified customer, a phone number corresponding to the customer, and a reception terminal type.

The speech management server 20 having received the paging instruction information then specifies a paging speech for use in paging (ST104). Specifically, the paging unit 211 specifies specific paging speech for use in paging from among a plurality of paging speeches stored in the speech database DB on the basis of the reception store and reception terminal type included in the paging instruction information. In this embodiment, a paging speech is prepared for each combination of a reception store and a reception terminal type. In other words, the speech database DB stores a paging speech for a case where the reception terminal is the customer terminal 30, a paging speech for a case where the reception terminal is the store reception robot terminal 40, and a paging speech for a case where the reception terminal is the store reception general terminal 50 for each reception store.

For example, the paging speech corresponding to the case where the reception terminal is the customer terminal 30 includes a content of providing notification that the turn is coming and a content of providing guidance for the layout of the store. On the other hand, the paging speech corresponding to the case where the reception terminal is the store terminal includes a content of providing notification that the turn is coming, while not including the content of providing guidance for the layout of the store. In this manner, the contents of at least some of the plurality of paging speeches are different from each other.

Moreover, for example, the paging speech corresponding to the case where the reception terminal is the store reception robot terminal 40 has the same tone as the tone of the store reception robot terminal 40 as a humanoid robot. Specifically, the paging speech concerned is configured as a speech uttered by the store reception robot terminal 40 as a humanoid robot. On the other hand, the paging speech corresponding to the case where the reception terminal is the customer terminal 30 or the store reception general terminal 50 is configured as a speech vocalized by a specific person (for example, a speech vocalized by the specific person is recorded). In this manner, the tones of at least some of the plurality of paging speeches are different from each other.

From among the plurality of paging speeches prepared as described above, the paging unit 211 specifies the paging speech corresponding to the reception store and the reception terminal type included in the paging instruction information. Incidentally, the specification of the paging speech may be performed on the waiting management server 10 side. In this case, the correspondence between a combination of the reception store and the reception terminal type and the paging speech is managed on the waiting management server 10 side, by which the waiting management server 10 is able to specify the paging speech corresponding to the reception store and the reception terminal type. Furthermore, in this case, the paging instruction information includes information for identifying the specified paging speech, instead of the reception store and the reception terminal type.

A paging speech for use in paging is specified in this manner, and then the speech management server 20 calls the customer (ST106) and thereafter plays the specified paging speech (ST108). Specifically, the paging unit 211 calls the customer by using the phone number included in the paging instruction information and then plays the specified paging speech after the connection with the terminal of the call destination is established. In response to the playing of the paging speech, the paging speech is output in the terminal of the call destination (for example, the customer terminal 30).

As described above, in this embodiment, the paging speech for use in paging the customer is specified on the basis of the reception store and the reception terminal type, thereby preventing the uniformity in the manner of paging customers. For example, a customer, who has completed the reception of the waiting order via the customer terminal 30, is likely not to know the layout of the store, and therefore the content of providing guidance for the layout of the store is included in the paging speech, thereby improving the convenience for customers. Additionally, for example, a paging speech for a customer who has completed the reception of the waiting order via the store reception robot terminal 40 is configured as a speech uttered by the store reception robot terminal 40 as a humanoid robot, thereby enabling a provision of a consistent user experience (UX).

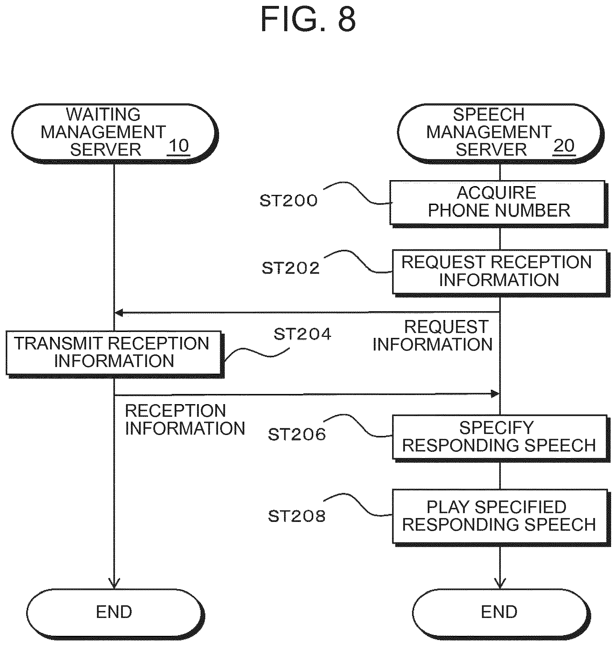

The operation of performing paging for a customer has been described hereinabove. An operation of responding to an inquiry from a customer will be described next. Fig. 8 is a sequence diagram illustrating a communication exchanged between the waiting management server 10 and the speech management server 20 when responding to an inquiry from a customer. When responding to the inquiry, the speech management server 20, first, acquires the phone number of the customer who has made the inquiry (ST200). Specifically, the response unit 212 acquires a caller's number notified on the phone where the incoming call was received. Incidentally, unless the notification of the caller's number is provided on the phone where the incoming call was received, the customer may be prompted to input the phone number.

Subsequently, the speech management server 20 requests the waiting management server 10 to transmit the reception information (the reception store and the reception terminal type) corresponding to the acquired phone number (ST202). Specifically, the response unit 212 transmits request information for requesting reception information to the waiting management server 10. The request information includes the phone number acquired in ST200.

The waiting management server 10 having received the request information transmits the corresponding reception information to the speech management server 20 (ST204). Specifically, the turn management unit 112 specifies the reception store and the reception terminal type corresponding to the phone number included in the request information with reference to the waiting management table TA and transmits the specified reception store and reception terminal type as the reception information to the speech management server 20.

Upon receiving the reception information, the speech management server 20 specifies the responding speech for use in responding (ST206). Specifically, the response unit 212 specifies a specific responding speech for use in responding from among a plurality of responding speeches stored in the speech database DB on the basis of the reception store and the reception terminal type which have been received. In this embodiment, the responding speech is prepared for each combination of the reception store and the reception terminal type, similarly to the paging speech.

The speech management server 20 (the response unit 212) then plays the specified responding speech (ST208). In response to the play of the responding speech, the terminal of the caller (for example, the customer terminal 30) outputs a responding speech. The responding speech is, for example, a guidance speech for specifying an operator who is to handle the content of the inquiry from the customer. In this case, the guidance speech is used to prompt the customer to input the numeric key corresponding to the content of the inquiry, and the speech management server 20 transfers the call to, for example, an operator corresponding to the input numeric key. Moreover, the responding speech is, for example, a speech output during a period after the incoming call is received until a person in charge on the store side answers the phone (a speech corresponding to a music on hold).

As described above, in this embodiment, the responding speech to the inquiry from the customer is specified on the basis of the reception store and the reception terminal type in addition to the paging speech, thereby also preventing uniformity in the manner of responding to an inquiry.

Although the configuration is made in such a way that the paging/responding speech is specified on the basis of the reception store and the reception terminal type in this embodiment, the configuration may be made in such a way that the paging/responding speech is specified on the basis of other information indicating the waiting reception form, instead of or in addition to the reception terminal type. For example, the configuration may be made in such a way that the paging/responding speech is specified on the basis of the working language used for reception (as described above, the working language used for reception can be switched by selecting the working language switching object 62 on the customer terminal reception screen 60 or the working language switching object 82 on the store terminal reception screen 80). In this case, the working language used for reception is able to be managed on the waiting management table TA. Thereby, the speech for use in paging/responding is able to be a speech corresponding to the working language used for reception. Consequently, the convenience for customers is improved.

Moreover, in this embodiment, the configuration may be made in such a way that the paging/responding speech is specified on the basis of information other than the waiting reception form. For example, the configuration may be made in such a way that a paging or responding speech is specified, in other words, the content, tone, or the like of the speech is switched on the basis of various information input by a customer at the time of reception or during the waiting time (also able to be referred to as "waiting order attribute information") like, for example, the number of customers (including the number of customers classified by adult/child category) in the above embodiment or selected waiting items. The waiting item is an option that a customer is able to select at the time of reception of the waiting order such as a requested seat style, the type of matter, or the like, and preferably the waiting item can be set on the store side.

Furthermore, although paging for a customer has been implemented by paging on a phone in this embodiment, paging for a customer may be implemented by using means of communication other than a phone. For example, a specific paging speech may be transmitted to a customer-side terminal such as the customer terminal 30 via data communication and then be played, thereby enabling the paging for a customer to be implemented.

Moreover, although the waiting management server 10 and the speech management server 20 have been configured as servers separate from each other in this embodiment, the waiting management server 10 and the speech management server 20 may be configured as a single server.

The waiting management system 1 according to the embodiment of the present disclosure described hereinabove includes the reception unit 111 that receives the waiting order of a customer, the turn management unit 112 that manages the turn of a customer whose waiting order has been received, and the paging unit 211 that performs paging for a customer at a predetermined timing using a specific paging speech specified from among a plurality of paging speeches on the basis of a waiting reception form. The waiting management system 1 performs paging for a customer using a specific paging speech specified on the basis of a waiting reception form in this manner, thereby preventing the paging for customers waiting for their turns from being uniform.

### Reference Signs List

1: Waiting management system
10: Waiting management server
111: Reception unit
112: Turn management unit
113: Paging instruction unit
20: Speech management server
211: Paging unit
212: Response unit
30: Customer terminal
40: Store reception robot terminal
50: Store recept s ion tablet terminal
60: Customer terminal reception screen
70: Reception number issue screen
80: Store terminal reception screen
90: Reception number issue screen
TA: Waiting management table
DB: Speech database

## Claims

1. A waiting management system that manages waiting orders, comprising:
a reception unit that receives the waiting order of a customer;
a turn management unit that manages the turn of the customer whose waiting order has been received; and
a paging unit that performs paging for a customer at a predetermined timing using a specific paging speech specified from among a plurality of paging speeches on the basis of a waiting reception form.

2. The waiting management system according to claim 1, wherein:
the reception unit receives the waiting order via a reception terminal; and
the reception form includes the type of the reception terminal that received the waiting order.

3. The waiting management system according to claim 1 or 2, wherein the reception form includes a working language used when the waiting order is received.

4. The waiting management system according to any one of claims 1 to 3, wherein the paging unit calls a phone number corresponding to the customer and plays the specific paging speech.

5. The waiting management system according to any one of claims 1 to 4, wherein:
the reception unit receives waiting orders in each of a plurality of stores;
the turn management unit manages the turns of customers for each reception store; and
the specific paging speech is specified from among the plurality of paging speeches on the basis of the waiting reception form and the reception store.

6. The waiting management system according to any one of claims 1 to 5, further comprising a response unit that responds to an inquiry from a customer, on the basis of the waiting reception form, using a specific responding speech specified from among a plurality of responding speeches.

7. The waiting management system according to any one of claims 1 to 6, wherein the paging unit performs paging for a customer at a timing when the turn comes to a predetermined position in an order.

8. A waiting management system that manages waiting orders, comprising:
a reception unit that receives the waiting order of a customer via a reception terminal;
a turn management unit that manages the turn of the customer whose waiting order has been received; and
a paging unit that performs paging for a customer at a predetermined timing using a specific paging speech specified from among a plurality of paging speeches on the basis of a waiting reception form, wherein the reception form includes the type of the reception terminal that received the waiting order.

9. A waiting management server that is communicatively connected to a speech management server to manage waiting orders, comprising:
a reception unit that receives the waiting order of a customer;
a turn management unit that manages the turn of the customer whose waiting order has been received; and
a paging instruction unit that instructs the speech management server to perform paging for a customer at a predetermined timing using a specific paging speech specified from among a plurality of paging speeches on the basis of a waiting reception form.

10. A waiting management method of managing waiting orders, which is performed by one or more computers, the method comprising the steps of:
receiving the waiting order of a customer;
managing the turn of the customer whose waiting order has been received; and
performing paging for a customer at a predetermined timing using a specific paging speech specified from among a plurality of paging speeches on the basis of a waiting reception form.

11. A waiting management program for managing waiting orders, causing one or more computers to perform the processes of:
receiving the waiting order of a customer;
managing the turn of the customer whose waiting order has been received; and
performing paging for a customer at a predetermined timing using a specific paging speech specified from among a plurality of paging speeches on the basis of a waiting reception form.
